# FASCICULE DE BREVET EUROPEEN

(11) **EP 0 567 402 B1**
(45) Date de publication et mention de la délivrance du brevet: **13.03.1996**
(21) Numéro de dépôt: 93401038.0
(22) Date de dépôt: 21.04.1993
(51) Int. Cl.: B60H 1/22, H05B 3/14

(54) **Dispositif de chauffage-ventilation de l'habitacle d'un véhicule automobile propulsé par un moteur à faibles rejets thermiques**
Vorrichtung für die Heizung und Lüftung des Innenraums von Motorfahrzeugen mit geringer Wärmeabgabe des Motors
Device for heating and ventilating the passenger compartment of a motor vehicle with and engine of reduced heat ejection

(30) Priorité: 21.04.1992 FR 9204859
(43) Date de publication de la demande: 27.10.1993
(73) Titulaire: Valeo Climatisation, F-78321 La Verrière (FR)
(72) Inventeur: Sarbach, Jean-Charles, F-78690 Les Essarts le Roi (FR)
(74) Mandataire: Gamonal, Didier

(56) Documents cités:
- EP-A- 0 243 077
- EP-A- 0 275 720
- FR-A- 2 597 222
- US-A- 4 459 466
- PATENT ABSTRACTS OF JAPAN vol. 14, no. 221 (M-971)(4164) 10 Mai 1990 & JP-A-02 053 628 (TEXAS INSTRUMENTS) 22 Février 1990

## Description

L'invention concerne un dispositif de chauffage-ventilation de l'habitable d'un véhicule automobile propulsé par un moteur à faibles rejets thermiques.

Elle concerne plus particulièrement un dispositif du type comportant une entrée d'air munie d'un pulseur d'air, une sortie d'air alimentant au moins une conduite de sortie débouchant dans l'habitacle, une branche de réchauffage d'air interposée entre l'entrée d'air et la sortie d'air, ainsi que des moyens de chauffage contenus dans la branche de réchauffage d'air.

Généralement, un dispositif de ce type comporte en outre une branche de transmission d'air interposée entre l'entrée d'air et la sortie d'air et un volet de réglage propre à répartir un flux d'air entre la branche de réchauffage d'air et la branche de transmission d'air.

On connaît déjà des dispositifs de ce type qui peuvent être installés soit dans un véhicule automobile à moteur à combustion interne, soit dans un véhicule automobile à moteur électrique.

Dans le cas d'un véhicule automobile à moteur à combustion interne, les moyens de chauffage du dispositif sont constitués classiquement par un échangeur de chaleur alimenté par le liquide de refroidissement du moteur et traversé par un flux d'air qui est envoyé dans l'habitacle. Par conséquent, le chauffage de l'habitacle est obtenu en récupérant au moins en partie les rejets thermiques du moteur.

Or, dans les véhicules automobiles modernes à moteur à combustion interne, la puissance disponible sur le circuit de refroidissement du moteur est de plus en plus limitée du fait de l'amélioration continue des rendements des moteurs. Il en résulte que les rejets thermiques sont souvent insuffisants pour assurer un chauffage efficace, notamment par temps froid.

Dans le cas d'un véhicule automobile à moteur électrique, alimenté par une source de tension électrique embarquée, c'est-à-dire des batteries, les rejets thermiques du moteur sont quasiment inexistants.

C'est la raison pour laquelle le chauffage de tels véhicules est effectué soit au moyen d'un brûleur, soit encore au moyen d'une ou plusieurs résistances électriques alimentées par les batteries et traversées par un flux d'air envoyé dans l'habitacle par un pulseur.

Ces résistances, que l'on peut appeler "résistances pures" ou encore "résistances passives", posent des problèmes de sécurité thermique du fait que, lorsque le flux d'air est arrêté, la puissance des résistances ne peut pas être dissipée sous forme thermique. Il en résulte alors des risques d'incendie par fusion puis combustion des matières plastiques situées au voisinage des résistances. Pour éviter cet inconvénient, il faut prévoir un détecteur de température commandant une électronique de régulation de puissance de manière à délivrer toute la puissance à basse température et à couper la puissance à haute température, par exemple pour une température supérieure à 120°C.

En outre, ces résistances connues ont pour inconvénient d'entraîner une consommation électrique importante, prélevée sur la capacité des batteries, et nuisant ainsi à l'autonomie du véhicule.

On a proposé récemment d'utiliser des résistances à coefficient de température positif (CTP), c'est-à-dire des résistances dont la valeur résistive varie très fortement en fonction de la température, à la différence des résistances pures ou passives, dont la valeur résistive est pratiquement constante, quelle que soit la température.

Dans les résistances CTP, la valeur de la résistance, encore appelée "valeur ohmique", croît très rapidement au-delà d'un seuil de température appelé "seuil critique" ou "seuil de transition". Elles ont pour avantage d'être auto-régulées en température, de sorte que la puissance électrique s'ajuste d'elle-même pour une température de travail à peu près constante en régime établi. L'utilisation d'une résistance CTP permet ainsi d'adapter la puissance électrique consommée à la puissance thermique désirée, et cela sans moyen de contrôle supplémentaire. En revanche, les résistances CTP ont pour inconvénient d'avoir une faible valeur ohmique en début d'utilisation à température très basse, par exemple à -20°C.

Il en résulte qu'elles entraînent des courants électriques anormalement élevés, du fait de la résistance elle-même très faible du circuit électrique extérieur (batterie et conducteur de liaison). Cette création de courant électrique élevé peut être néfaste, même s'il s'agit d'un phénomène de courte durée.

L'invention a notamment pour but de surmonter les inconvénients mentionnés ci-dessus.

C'est en particulier un but de l'invention de procurer un dispositif de chauffage-ventilation qui convient tout particulièrement aux véhicules automobiles équipés de moteurs à faibles rejets thermiques.

C'est encore un but de l'invention de procurer un tel dispositif qui peut être utilisé aussi bien dans un véhicule automobile à moteur à combustion interne, que dans un véhicule automobile à moteur électrique.

C'est encore un but de l'invention de procurer un dispositif du type défini ci-dessus qui offre une grande sécurité de fonctionnement.

L'invention propose à cet effet un dispositif de chauffage-ventilation du type défini en introduction, dans lequel les moyens de chauffage contenus dans la branche de réchauffage d'air comprennent un radiateur à résistance pure ou passive et un radiateur à résistance à coefficient de température positif (CTP), ces deux radiateurs étant reliés électriquement en série dans un circuit électrique alimenté par une source de tension.

L'invention permet ainsi de limiter le courant à très basse température de fonctionnement, par exemple aux environs de - 20°C, du fait que l'essentiel de la résistance de charge est constitué par la résistance pure ou passive.

De plus, l'invention permet de limiter le courant à haute température de fonctionnement, par exemple à environ 120°C, en raison de l'effet entraîné par la résistance CTP. En effet, la puissance électrique s'ajuste elle-même pour une température de travail à peu près constante en régime établi, d'où un effet d'auto-limitation.

Selon une autre caractéristique de l'invention, le radiateur à résistance pure et le radiateur à résistance CTP sont disposés en série dans la branche de réchauffage d'air pour être traversés successivement par un flux d'air.

Selon une autre caractéristique de l'invention, la résistance CTP est choisie de telle manière que sa valeur soit sensiblement constante dans un premier intervalle de température et que sa valeur augmente très fortement dans un second intervalle de température, au-delà d'un seuil de transition.

On s'arrange alors pour que la température de fonctionnement de la résistance CTP soit proche de son seuil de transition. Ainsi, lorsque la température de l'air entrant dans le dispositif diminue, on évite une chute trop brutale de la résistance qui provoquerait une augmentation importante de la puissance consommée.

Dans une variante de réalisation de l'invention, le radiateur à résistance pure et le radiateur à résistance à coefficient de température positif (CTP) sont regroupés dans un seul appareil qui comprend au moins un corps d'échange de chaleur, au moins une résistance pure, au moins une résistance CTP, une liaison électrique entre la résistance pure et la résistance CTP, ainsi que des liaisons électriques pour relier la résistance pure et la résistance CTP à la source de tension électrique.

De préférence, cet appareil comprend trois corps d'échange de chaleur, à savoir deux corps d'extrémités et un corps intermédiaire qui encadrent d'une part la ou les résistances et d'autre part la ou les résistances CTP.

Avantageusement, le corps d'extrémité et le corps intermédiaire qui encadrent la ou les résistances CTP forment en même temps des éléments d'arrivée de courant pour la ou les résistances CTP.

La source électrique alimentant le dispositif peut être une batterie embarquée dans le cas d'un véhicule automobile à moteur électrique, ou encore un alternateur entraîné par le moteur du véhicule, lorsque ce dernier est à combustion interne.

Dans la description qui suit, faite seulement à titre d'exemple, on se réfère au dessin annexé, sur lequel :
- la figure 1 est une représentation schématique d'un dispositif de chauffage-ventilation conforme à l'invention;
- la figure 2 est un graphique représentant la variation de la valeur d'une résistance CTP en fonction de la température de cette résistance; et
- la figure 3 est une coupe schématique montrant un appareil regroupant un radiateur à résistance pure et un radiateur à résistance CTP.

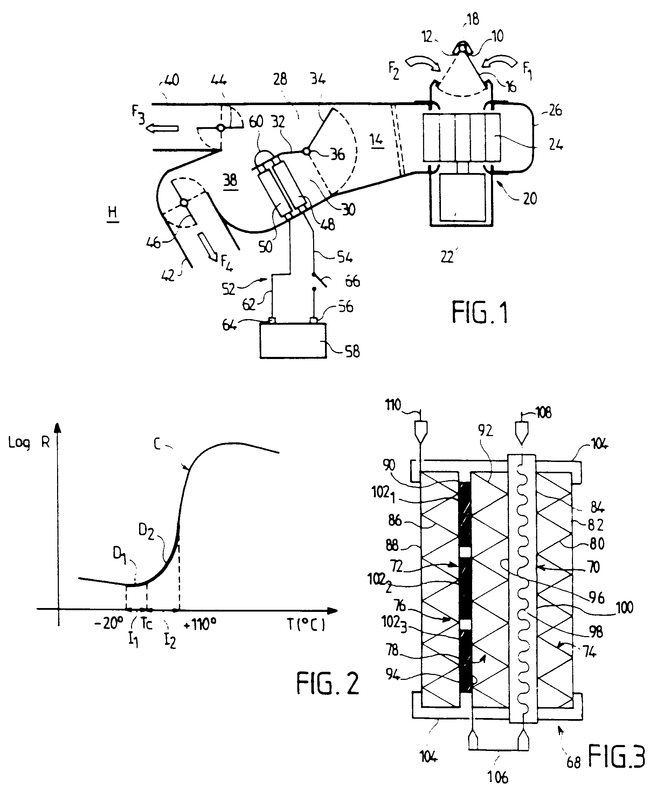

Le dispositif de chauffage-ventilation représenté schématiquement à la figure 1 comprend une admission 10 pour de l'air prélevé à l'extérieur de l'habitacle H d'un véhicule automobile et une admission 12 pour de l'air recyclé provenant de l'intérieur de l'habitacle H, comme montré respectivement par les flèches F₁ et F₂. Les admissions 10 et 12 débouchent dans une entrée d'air 14 qui fait partie du dispositif de l'invention. Un volet d'entrée d'air 16 monté pivotant autour d'un axe 18 permet d'alimenter l'entrée d'air 14, soit avec de l'air extérieur (position représentée en trait interrompu), soit avec de l'air recyclé (position représentée en trait plein), soit par un mélange des deux. L'entrée d'air 14 est munie intérieurement d'un pulseur d'air 20 comprenant un moteur électrique 22 entraînant en rotation une turbine 24 tournant dans une volute 26 aboutissant à l'entrée d'air 14.

L'entrée d'air 14 débouche ensuite en parallèle sur une branche de transmission d'air 28 et sur une branche de réchauffage d'air 30, les branches 28 et 30 étant séparées par une paroi 32. Un volet de réglage 34, encore appelé "volet de mélange", est monté à rotation autour d'un axe 36 en amont de la cloison 32 pour permettre d'ajuster la répartition du flux d'air entre les deux branches 28 et 30.

Ces deux branches se rejoignent, en aval de la cloison 32, dans une chambre 38 où les flux d'air issus des deux branches se rejoignent et se mélangent. La chambre 38 alimente deux conduites de sortie 40 et 42. Dans l'exemple, la conduite 40 est destinée à alimenter une ou plusieurs bouches situées sur la planche de bord du véhicule, tandis que la conduite 42 est propre à alimenter une ou plusieurs bouches orientées en partie inférieure de l'habitacle. Les conduites 40 et 42 sont contrôlées respectivement par un volet 44 et un volet 46.

La structure générale du dispositif, telle qu'elle vient d'être décrite précédemment, est en elle-même connue.

Conformément à l'invention, la branche de réchauffage d'air 30 contient deux radiateurs électriques de chauffage 48 et 50. Le radiateur électrique 48 comprend une ou plusieurs résistances électriques classiques, c'est-à-dire des résistances pures ou passives, dont la valeur ohmique est sensiblement constante en fonction de la température.

Le radiateur électrique 50 contient une ou plusieurs résistances électriques à coefficient de température positif (CTP).

Les radiateurs 48 et 50 sont montés en série dans un circuit électrique 52 comprenant une liaison électrique 54 reliant le radiateur 48 à l'un des pôles 56 d'une batterie 58, une liaison électrique 60 reliant entre eux les radiateurs 48 et 50 et une liaison électrique 62 reliant le radiateur 50 à l'autre pôle 64 de la batterie 58. La liaison 54 comprend en outre un interrupteur 66 propre à fermer ou ouvrir le circuit 52 pour assurer l'alimentation des radiateurs 48 et 50 ou respectivement couper cette alimentation.

Dans l'exemple représenté, les radiateurs 48 et 50 sont disposés en série à l'intérieur de la branche 30, le radiateur 48 étant ici disposé en amont du radiateur 50 par rapport au sens de circulation du flux d'air, bien que la disposition inverse soit possible.

Lorsque les radiateurs 48 et 50 sont alimentés électriquement, l'air circulant dans la branche 30 peut être ainsi réchauffé.

Le volet 34 permet de répartir, de façon en soi connue, le flux d'air entre les branches 28 et 30 pour ajuster la température de l'air envoyé au travers des conduites de sortie 40 et 42.

Comme indiqué précédemment, le radiateur 48 comprend au moins une résistance classique dont la valeur ohmique est constante en fonction de la température.

Par contre, le radiateur 50 comprend au moins une résistance à coefficient de température positif. On connaît déjà, par exemple d'après le document EP-A-204 393 un appareil de chauffage domestique comportant des résistances de ce type.

Dans un appareil à résistance du type CTP, la valeur ohmique de la résistance varie en fonction de la température, comme le montre la figure 2 qui représente une courbe C montrant l'évolution du logarithme de la résistance (Log R) en fonction de la température (T), exprimée ici en °C.

Dans un premier intervalle de températures I₁, la courbe C comporte un premier domaine D₁ dans lequel la résistance est pratiquement constante. Dans un deuxième intervalle de températures I₂, la courbe C comporte un second domaine D₂ dans lequel la résistance augmente très fortement avec la température. Les intervalles I₁ et I₂ se situent respectivement en dessous et au-dessus d'un seuil de température correspondant à une température critique T_{c}. Conformément à l'invention, il est particulièrement intéressant de choisir le domaine de fonctionnement des résistances pour qu'il se situe au voisinage de la température critique.

Le radiateur à résistance pure 48 est avantageusement situé en amont du radiateur 50 à résistance CTP, sans que toutefois cela soit indispensable au fonctionnement. Le flux d'air réchauffé par le radiateur 48 élève la température du radiateur 50 à résistance CTP, ce qui accentue l'effet de limitation. Le même effet peut être obtenu en disposant la ou les résistances pures et la ou les résistances CTP dans un appareil unique regroupant ainsi un radiateur à résistance pure et un radiateur à résistance CTP.

On se réfère maintenant à la figure 3 qui représente un appareil 68 qui regroupe, dans une même structure, un radiateur 70 à résistance pure et un radiateur 72 à résistance CTP. L'appareil 68 comprend trois corps d'échange de chaleur : deux corps d'extrémités 74 et 76 et un corps intermédiaire 78. Le radiateur 70 est entouré par les corps 74 et 78 et le radiateur 72 par les corps 76 et 78.

Le corps 74 est formé d'une succession d'ailettes 80 en forme d'accordéon maintenues entre deux barrettes 82 et 84. De la même façon, le corps 76 est formé d'une succession d'ailettes 86 en accordéon maintenues entre deux barrettes 88 et 90. Egalement, le corps intermédiaire 78 est formé d'une succession d'ailettes en accordéon 92 maintenues entre deux barrettes 94 et 96.

Dans l'exemple, le radiateur 70 comprend une seule résistance pure 98 disposée dans un tube 100 qui est rempli d'un isolant électrique.

Le radiateur 72 comprend ici trois résistances CTP 102₁, 102₂ et 102₃.

L'ensemble ainsi constitué est maintenu par un châssis 104.

Conformément à l'invention, les corps 76 et 78 servent en même temps d'éléments d'arrivée de courant pour les résistances CTP 102₁, 102₂ et 102₃.

L'appareil de la figure 3 comprend en outre une liaison électrique 106 reliant la résistance pure 98 au corps 78 formant liaison électrique. Il comprend aussi une liaison électrique 108 propre à relier une source de tension électrique (non représentée) au corps 76 formant élément d'arrivée de courant et une autre liaison électrique 110 propre à relier la source de tension électrique à la résistance pure 98.

L'appareil 68 est avantageusement disposé de sorte que le flux d'air traverse d'abord la résistance pure et ensuite les résistances CTP.

Du fait que le dispositif de l'invention comprend un radiateur électrique à résistance classique et un radiateur électrique à résistance CTP, il présente les avantages suivants.

Tout d'abord, lorsque la température est très basse, par exemple aux environ de -20°C, la valeur ohmique de la résistance CTP est très faible, si bien que l'essentiel de la résistance de charge est constitué par la résistance passive.

On évite ainsi la création d'un courant électrique anormalement élevé qui se produirait dans le cas de l'utilisation d'une résistance CTP seule.

De plus, si la température de fonctionnement devient élevée, par exemple voisine de 120°C, l'essentiel de la résistance de charge est alors constitué par la résistance CTP dont la valeur ohmique est élevée.

On obtient ainsi une limitation de courant et une limitation de la puissance consommée.

Dans ces conditions, on obtient une auto-limitation de l'intensité du courant traversant les deux types de résistances, et cela aussi bien à basse température qu'à haute température.

Il en résulte également une auto-limitation de la puissance électrique consommée, et cela dans des conditions maximales de sécurité.

Le dispositif de l'invention peut comporter en outre, si nécessaire, un capteur de température pour couper l'alimentation électrique des résistances en cas d'anomalies.

Dans le dispositif décrit précédemment, la source électrique alimentant les radiateurs 48 et 50 est une batterie 58 à courant continu. Un tel dispositif convient donc tout particulièrement dans le cas d'un véhicule automobile électrique comportant des batteries haute tension pour l'alimentation du moteur électrique assurant sa propulsion.

Le dispositif de l'invention peut être aussi utilisé dans le cas d'un véhicule automobile à moteur à combustion interne. Dans ce cas, la source électrique est un alternateur à haute tension entraîné par le moteur du véhicule.

Compte tenu de l'effet d'auto-limitation du dispositif, la consommation électrique est toujours adaptée aux besoins, sans pénaliser l'autonomie du véhicule.

## Revendications

1. Dispositif de chauffage-ventilation de l'habitacle d'un véhicule automobile à moteur à faibles rejets thermiques, du type comportant une entrée d'air (14) munie d'un pulseur d'air (20), une sortie d'air (38) alimentant au moins une conduite de sortie (40,42) débouchant dans l'habitacle (H), une branche de réchauffage d'air (30) interposée entre l'entrée d'air et la sortie d'air ainsi que des moyens de chauffage contenus dans la branche de réchauffage d'air, caractérisé en ce que les moyens de chauffage comprennent un radiateur électrique (48; 70) à résistance pure et un radiateur électrique (50; 72) à résistance à coefficient de température positif (CTP), reliés électriquement en série dans un circuit électrique (52; 106; 108; 110) alimenté par une source de tension électrique (58).

2. Dispositif selon la revendication 1, caractérisé en ce que le radiateur (48; 70) à résistance pure et le radiateur (50; 72) à résistance à coefficient de température positif sont disposés en série dans la branche de réchauffage d'air (30) pour être traversés successivement par un flux d'air.

3. Dispositif selon l'une des revendications 1 et 2, caractérisé en ce que la résistance CTP est choisie de telle manière que sa valeur soit sensiblement constante dans un premier intervalle de température (I₁) et que sa valeur augmente très fortement dans un second intervalle de températures (I₂), au-delà d'une température critique (T_{c}) et que la température de fonctionnement du dispositif soit choisie proche de la température critique.

4. Dispositif selon l'une des revendications 1 à 3, caractérisé en ce que le radiateur (70) à résistance pure et le radiateur (72) à résistance CTP sont regroupés dans un seul appareil (68) qui comprend au moins un corps d'échange de chaleur (74, 76, 78), au moins une résistance pure (98), au moins une résistance CTP (102₁, 102₂, 102₃), une liaison électrique entre la résistance pure (98) et la ou les résistances (CTP), des liaisons électriques (108, 110) reliant la résistance pure et la ou les résistances CTP à une source de tension.

5. Dispositif selon la revendication 4, caractérisé en ce que le radiateur comprend trois corps d'échange de chaleur, à savoir deux corps d'extrémités (74 et 76) et un corps intermédiaire (78) qui encadre, d'une part, la ou les résistances pures (98), et d'autre part, la ou les résistances CTP (102₁, 102₂, 102₃).

6. Dispositif selon la revendication 5, caractérisé en ce que le corps d'extrémité (76) et le corps intermédiaire (78) encadrant la ou les résistances CTP (102₁, 102₂, 102₃) constituent en même des éléments d'arrivée de courant pour cette ou ces résistances CTP.

7. Dispositif selon l'une des revendications 1 à 6, caractérisé en ce que la source électrique (58) est une batterie embarquée sur le véhicule.

8. Dispositif selon l'une des revendications 1 à 6, caractérisé en ce que la source électrique (58) est un alternateur entraîné par le moteur du véhicule.

## Claims

1. Heating and ventilating apparatus for the cabin of a motor vehicle having a propulsion motor with low heat loss, of the type comprising an air inlet (14) having an air blower (20), an air outlet (38) feeding at least one outlet duct (40, 42) which exhausts into the cabin (H), an air heating branch (30) interposed between the air inlet and the air outlet, and heating means contained in the air heating branch, characterised in that the heating means comprise an electric radiant heater (48; 70) having a pure resistance, together with an electric radiant heater (50; 72) having a positive temperature coefficient of resistance (PTC), which heaters are connected electrically in series in an electrical circuit (52; 106; 108; 110) supplied with power from an electrical voltage source (58).

2. Apparatus according to Claim 1, characterised in that the pure resistance radiant heater (48; 70) and the radiant heater with positive temperature coefficient of resistance (50; 72) are disposed in series in the air heating branch (30), so that an air stream flows through them in succession.

3. Apparatus according to Claim 1 or Claim 2, characterised in that the PTC resistance is so selected that its value is substantially constant over a first range of temperature (I₁), and so that its value increases very sharply in a second range of temperatures (I₂) above a critical temperature (T_{c}), and so that the operating temperature of the apparatus is chosen to lie close to the critical temperature.

4. Apparatus according to one of Claims 1 to 3, characterised in that the pure resistance radiant heater (70) and the radiant heater with PTC resistance (72) are grouped together in a single unit (68) which includes at least one heat exchange body (74, 76, 78), at least one pure resistor (98), at least one PTC resistor (102₁, 102₂, 102₃), an electrical connection between the pure resistor (98) and the PTC resistor or resistors, and electrical connections (108, 110) connecting the pure resistor and the PTC resistor or resistors to a voltage source.

5. Apparatus according to Claim 4, characterised in that the radiant heater comprises three heat exchange bodies, namely two end bodies (74 and 76) and an intermediate body (78), which flanks, firstly the pure resistor or resistors (98), and secondly the PTC resistor or resistors (102₁, 102₂, 102₃).

6. Apparatus according to Claim 5, characterised in that the end body (76) and the intermediate body (78), which flank the PTC resistor or resistors (102₁, 102₂, 102₃), constitute, in common, current input elements for the said PTC resistor or resistors.

7. Apparatus according to one of Claims 1 to 6, characterised in that the electrical source (58) is a battery carried on the vehicle.

8. Apparatus according to one of Claims 1 to 6, characterised in that the electrical source (58) is an alternator driven by the motor of the vehicle.

## Patentansprüche

1. Vorrichtung für die Heizung und Lüftung des Innenraums von Motorfahrzeugen mit geringer Wärmeabgabe des Motors in der Ausführung mit einem Lufteinlaß (14), der mit einem Luftgebläse (20) versehen ist, einem Luftauslaß (38), der wenigstens einen in den Fahrzeuginnenraum (H) führenden Auslaßkanal (40, 42) speist, einem Lufterwärmungsstrang (30), der zwischen dem Lufteinlaß und dem Luftauslaß angeordnet ist, sowie mit Heizungsmitteln, die im Lufterwärmungsstrang enthalten sind, **dadurch gekennzeichnet,** daß die Heizungsmittel einen elektrischen Radiator (48; 70) mit reinem oder passivem Widerstand und einen Radiator (50; 72) mit einem Widerstand mit positivem Temperaturkoeffizienten (PTK) umfassen, die in einem durch eine elektrische Spannungsquelle (58) gespeisten Stromkreis (52; 106; 108; 110) elektrisch in Reihe geschaltet sind.

2. Vorrichtung nach Anspruch 1 , **dadurch gekennzeichnet,** daß der Radiator (48; 70) mit reinem Widerstand und der Radiator (50; 72) mit einem Widerstand mit positivem Temperaturkoeffizienten im Lufterwärmungsstrang (30) hintereinander angeordnet sind, damit sie nacheinander von einem Luftstrom durchströmt werden.

3. Vorrichtung nach einem der Ansprüche 1 und 2, **dadurch gekennzeichnet,** daß der PTK-Widerstand so gewählt wird, daß sein Wert in einem ersten Temperaturbereich (I₁) in etwa konstant ausfällt und daß sich sein Wert in einem zweiten Temperaturbereich (I₂), jenseits einer kritischen Temperatur (T_{c}), sehr stark erhöht, und daß die Betriebstemperatur der Vorrichtung nahe der kritischen Temperatur gewählt wird.

4. Vorrichtung nach einem der Ansprüche 1 bis 3, **dadurch gekennzeichnet,** daß der Radiator (70) mit reinem Widerstand und der Radiator (72) mit PTK-Widerstand zusammen in einem einzigen Gerät (68) untergebracht sind, das wenigstens einen Wärmeaustauschkörper (74, 76, 78), wenigstens einen reinen Widerstand (98), wenigsten einen PTK-Widerstand (102₁, 102₂, 102₃), eine elektrische Verbindung zwischen dem reinen Widerstand (98) und dem oder den PTK-Widerständen sowie elektrische Verbindungen (108, 110) umfaßt, um den reinen Widerstand und den oder die PTK-Widerstände mit einer Spannungsquelle zu verbinden.

5. Vorrichtung nach Anspruch 4 , **dadurch gekennzeichnet,** daß der Radiator drei Wärmeaustauschkörper umfaßt, und zwar zwei endseitige Körper (74 und 76) und einen Zwischenkörper (78), die einerseits den oder die reinen Widerstände (98) und andererseits den oder die PTK-Widerstände (102₁, 102₂, 102₃) umgeben.

6. Vorrichtung nach Anspruch 5 , **dadurch gekennzeichnet,** daß der endseitige Körper (76) und der Zwischenkörper (78), die den oder die PTK-Widerstände (102₁, 102₂, 102₃) umgeben, gleichzeitig Stromzuleitungselemente für diesen oder diese PTK-Widerstände bilden.

7. Vorrichtung nach einem der Ansprüche 1 bis 6, **dadurch gekennzeichnet,** daß es sich bei der elektrischen Spannungsquelle (58) um eine an Bord des Fahrzeugs installierte Batterie handelt.

8. Vorrichtung nach einem der Ansprüche 1 bis 6, **dadurch gekennzeichnet,** daß es sich bei der elektrischen Spannungsquelle (58) um einen Wechselstromgenerator handelt, der durch den Motor des Fahrzeugs angetrieben wird.
